Europäisches Patentamt

European Patent Office

Office européen des brevets

(11) Numéro de publication: **0 201 402**
**B1**

(12) **FASCICULE DE BREVET EUROPEEN**

(45) Date de publication du fascicule du brevet:
**02.08.89**

(21) Numéro de dépôt: 86400889.1

(22) Date de dépôt: **23.04.86**

(51) Int. Cl.⁴: **B23D 21/00, B26D 3/16**

(54) **Procédé et dispositif de tronçonnage de tubes.**

(30) Priorité: **06.05.85 FR 8506867**

(43) Date de publication de la demande:
**17.12.86 Bulletin 86/46**

(45) Mention de la délivrance du brevet:
**02.08.89 Bulletin 89/31**

(84) Etats contractants désignés:
**BE CH DE GB IT LI LU NL SE**

(56) Documents cités:
**FR-A- 2 164 382**
**US-A- 3 451 295**
**US-A- 4 347 770**

(73) Titulaire: **LHOMME SA (Société anonyme), Route de Paris, F-89140 Pont sur Yonne(FR)**

(72) Inventeur: **Languillat, Jean-Paul, Vallières, F-89260 Thorigny-sur-Oreuse(FR)**

(74) Mandataire: **Chambon, Gérard et al, Cabinet Chambon 6 et 8 avenue Salvador Allende, F-93804 Epinay-sur-Seine Cédex(FR)**

ACTORUM AG

## Description

L'invention concerne un procédé et un dispositif de tronçonnage de tubes et plus particulièrement, mais non exclusivement, de tubes en carton ou en plastique.

Le tronçonnage de tubes en carton ou autre s'effectue au moyen d'une scie ou d'un, ou plusieurs, couteaux, ces derniers présentant l'avantage pour des matières peu dures, d'effectuer des coupes franches.

Le tube est généralement mis en rotation sur un mandrin devant au moins un couteau qui est actionné par un vérin destiné à faire l'approche dudit couteau vers le tube et à entraîner sa pénétration dans la paroi dudit tube.

D'une manière générale, le couteau doit traverser entièrement la paroi du tube jusqu'à rencontrer une contre-partie ou contre-couteau plus dur.

La contre-partie peut, par exemple, être formée par le mandrin lui-même ou aménagée sur une partie de celui-ci.

Il est évident que la contrepartie cause une usure du couteau puisque ce dernier doit nécessairement entrer en contact avec elle et pour palier cet inconvénient, l'inventeur a cherché à limiter la pression exercée par le couteau au moment où il doit entrer en contact avec la contre-partie. Or, il est très difficile, voire impossible, de régler convenablement un vérin pour que celui-ci exerce une pression convenable sur le couteau au cours de la coupe pour finir avec une pression plus faible en fin de coupe. Il a toutefois déjà été imaginé des systèmes à leviers, tels que celui décrit dans le brevet US 3 451 295, celui-ci permettant un certain contrôle de l'action d'un vérin sur un outil. Mais il s'agit dans ce cas, principalement de lier de façon non proportionnelle les mouvements du vérin et de l'outil, en permettant en même temps d'accroître en fin de course la force de l'outil, ce qui est exactement l'inverse de l'effet recherché par la présente invention.

Pour atteindre le but sus-mentionné, l'inventeur préconise un procédé qui est remarquable en ce qu'il consiste à bloquer l'action du vérin avant la fin de la coupe complète de chaque tronçon de tube et à mettre alors en action ou libérer un autre moyen que ledit vérin pour actionner le couteau jusqu'à la coupe complète de chaque tronçon de tube, la force transmise à la partie active du couteau par l'autre moyen étant plus faible que celle transmise par le vérin.

L'inventeur préconise aussi un dispositif qui est remarquable en ce qu'il comporte un autre moyen que le vérin pour actionner le couteau, cet autre moyen étant aménagé pour entrer en action dès le blocage de l'action du vérin et pour transmettre sur la partie active du couteau une force plus faible que celle transmise par le vérin.

Les avantages de l'invention sont également intéressants, même en l'absence de contrepartie, car il est clair que ce sont les débuts et les fins de coupe qui sont les plus délicats pour obtenir une coupe franche.

Selon un mode de réalisation, l'autre moyen est un moyen élastique qui est aménagé de manière à se libérer dès le blocage de l'action du vérin pour actionner le couteau par sa force de pression.

Avantageusement dans ce cas, le couteau est monté sur un porte couteau pivotant sur un support et dont le pivotement est assuré en partie par l'une des extrémités dudit vérin dont l'autre extrémité est articulée sur un levier également pivotant sur ledit support et qui repose en partie sur le moyen élastique destiné à faire pivoter le levier vers le tube à tronçonner après avoir été comprimé par ledit levier lors d'un pivotement de ce dernier dans un sens opposé au tube et après un blocage de l'extension du vérin, tandis qu'un moyen est prévu pour limiter la course de pivotement du levier dans le sens opposé au tube à tronçonner.

De préférence, le moyen destiné à limiter la course de pivotement du levier dans le sens opposé au tube à tronçonner est une butée arrière éventuellement réglable qui vient pendre appui sur une partie fixe après une certaine compression du moyen élastique.

Le moyen élastique peut être taré pour solliciter en permanence le levier qui est alors pourvu d'une butée avant dans le sens de pivotement vers le tube de telle sorte que ledit moyen élastique sollicite le levier dans une position initiale de repos qui correspond à un pivotement maximal du levier vers le tube, le pivotement inverse du levier qui entraîne la compression du moyen élastique étant dû au couple résistant exercé par le tube au début de la coupe.

Le moyen élastique peut être formé par un ressort calé dans un logement et qui est muni d'une tête de pression qui émerge au repos dudit logement ou encore un vérin hydraulique ou pneumatique à pression sensiblement constante.

Selon un mode de réalisation, le dispositif est pourvu d'un moyen de contrôle de la position du porte couteau pour commander notamment le retour du couteau en position initiale, par l'actionnement du vérin en sens inverse.

Ce moyen de contrôle est par exemple un micro-contact, de préférence réglable en position, qui est actionné par un élément fixé au porte couteau ou solidaire de celui-ci.

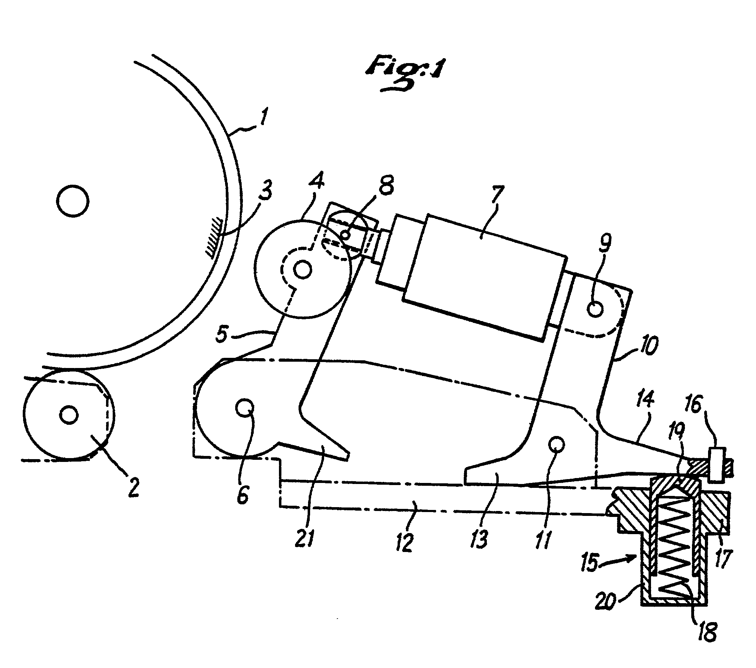

L'invention sera bien comprise et d'autres particularités apparaîtront à la lecture de la description qui va suivre et qui se réfère aux dessins annexés dans lesquels, les figures 1 à 3 montrent un dispositif de tronçonnage selon l'invention, dans différentes positions.

Un tube 1 à tronçonner, est guidé entre des rouleaux ou galets tels que 2 (figure 1) et entraîné en rotation par lesdits rouleaux et/ou un mandrin intérieur (non représenté) muni par exemple d'un moyen connu à mâchoires d'expansion.

A l'intérieur du tube 1, est généralement prévue une contrepartie dure, schématisée en 3 (figure 1), qui est fixe ou tournante et qui est par exemple aménagée sur une partie du mandrin intérieur.

Sur le côté, est aménagé le dispositif de tronçonnage qui comporte un couteau 4, ici circulaire, ce dernier pouvant être fixe en rotation ou au contraire motorisé ou encore libre en rotation.

Ce couteau 4 est monté sur un porte couteau 5 qui pivote autour d'un axe 6 fixe par rapport à un support 12 et qui est actionné par un vérin 7 à double effet, hydraulique, mécanique ou pneumatique.

La tige du vérin 7 est articulée en 8 à l'une des extrémités du porte couteau 5, tandis que l'autre extrémité du vérin 7 est articulée en 9 à un levier 10.

Le levier 10 est également articulé autour d'un axe 11 fixe par rapport au support 12. Le support 12 est généralement fixe au moins par rapport à l'axe du tube mais il peut éventuellement être mobile longitudinalement au tube, comme il sera dit ci-après.

Il est clair que le vérin 7 pourrait être retourné et présenter sa tige du côté du levier 10.

Le levier 10 présente sensiblement la forme d'un T renversé dont la barre du T s'étend de part et d'autre de l'axe 11 pour former un prolongement avant 13 et un prolongement arrière 14.

Le prolongement 14 repose sur un moyen élastique 15 et dans la position représentée à la figure 1, le prolongement 13 repose sur le support 12.

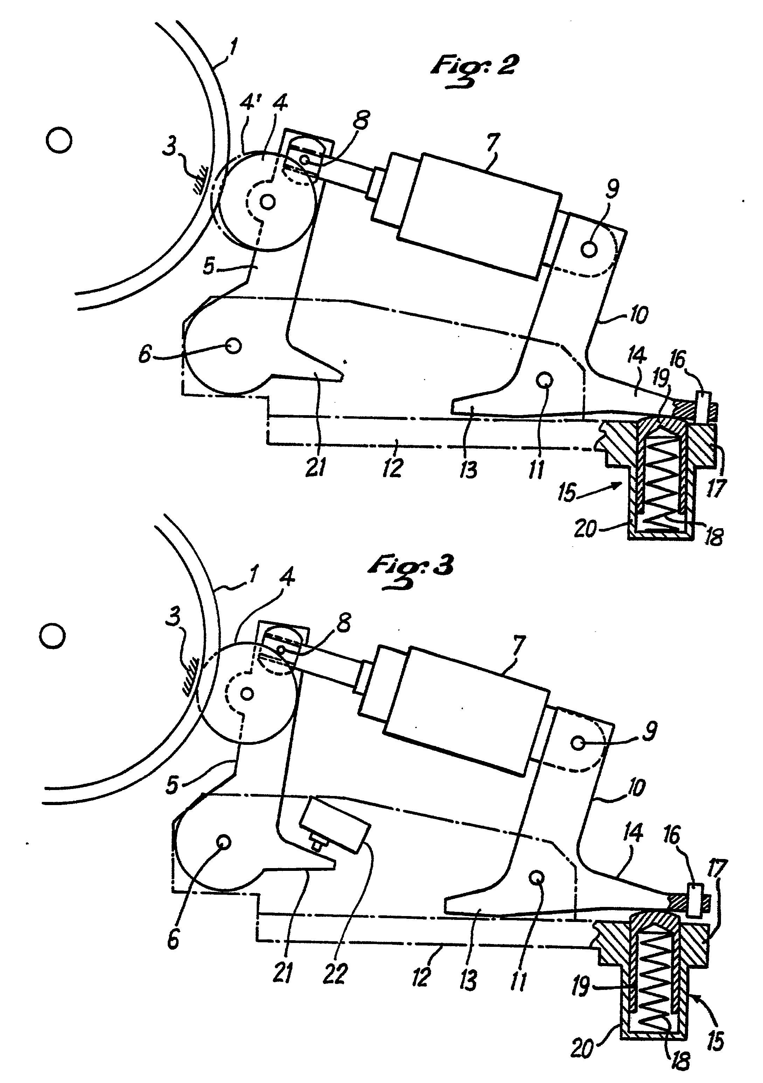

A l'extrémité du prolongement 14 est disposée une butée réglable 16 (à vis par exemple) destinée à reposer, comme il sera dit ci-après (figure 2), sur une partie 17 du support 12.

Le moyen élastique 15 représenté, comporte un ressort 18 coiffé d'une tête de pression 19, le ressort et ladite tête étant disposés dans un logement 20 du support 12.

Le ressort présente une certaine pré-contrainte de telle sorte que sa sollicitation fait pivoter le levier 10 vers l'avant et le prolongement 13 repose alors sur le bâti 12 dans la position représentée à la figure 1.

Cette position (figure 1) représente le dispositif à l'état initial.

On peut noter dès à présent que le moyen élastique 15 peut bien sûr être remplacé par tout autre moyen, par exemple hydraulique ou pneumatique, réglé à une certaine pression, de telle sorte que la force transmise sur la partie active du couteau par ledit moyen élastique, soit plus faible que celle transmise par le vérin 7.

Dans cette position, on remarquera que la butée 16 est réglée pour ne pas reposer sur la partie 17 du support.

Dans un premier temps, le vérin 7 est actionné, ce qui entraîne un pivotement du porte couteau 5 vers le tube, et le couteau 4 vient effleurer ledit tube puis commence à pénétrer dans la paroi de celui-ci.

Au début de la pénétration du couteau, le couple résistant exercé par le tube est supérieur au couple de basculement du levier 10 exercé par le moyen élastique 15 de telle sorte que le levier 10 pivote vers l'arrière, le prolongement 13 se soulève du support 12 et le prolongement 14 comprime le ressort 18 jusqu'à ce que la butée 16 vienne en contact avec la partie 17 dudit support 12 (figure 2).

A partir de cette position (figure 2) le vérin 7 continue son extension en prenant appui sur le levier 10, désormais fixe puisqu'il est lui-même en appui sur la partie 17. Le couteau continue alors sa pénétration dans la paroi du tube et arrive à la position référencée par 4' sur la figure 2, position dans laquelle le vérin est bloqué par tout moyen (fin de course du vérin obtenue par micro-contact, programmation, longueur de la tige...).

Dès le blocage de l'extension de la tige du vérin 7 et la disparition donc du couple résistant à l'action de coupe, le ressort 18 du moyen élastique 15 entraîne alors le basculement vers l'avant du levier 10 ce qui permet au couteau 4 de terminer la coupe en exerçant une pression sur le tube qui est moindre que celle qu'il aurait exercée avec l'action du vérin. La position de fin de cupe est représentée à la figure 3 le couteau 4 pouvant aller jusqu'à rencontrer la contrepartie dure 3.

Dans la position de la figure 3, on peut voir également que le prolongement 13 ne s'appuie pas sur le support 12.

Dans le mode de réalisation représenté, le porte couteau 5 comporte en outre un bec 21 destiné à actionner un micro-contact 22 (représenté seulement à la figure 3).

Le micro-contact 22, de préférence réglable en position, notamment pour tenir compte de l'usure du couteau, est réglé et aménagé de manière à commander les opérations qui suivent la fin de la coupe.

Il est intéressant de noter que le micro-contact 22 est actionné par un moyen 21 solidaire du couteau 4 ou du moins solidaire de son axe de rotation, ce qui permet de contrôler parfaitement la position du couteau, contrairement à d'autres dispositifs connus dans lesquels la position du couteau est contrôlée par la position d'un organe porteur du couteau tel qu'un chariot.

L'actionnement du micro-contact 22 va commander le vérin 7 qui va agir en sens inverse et ramener le porte couteau 5 dans sa position initiale représentée à la figure 1, position parfaitement précise puisque le prolongement 13 reprend alors appui sur le support 12 sous l'action du moyen élastique 15.

Le réglage de la position du micro-contact 22 permet en outre de limiter la durée du contact du couteau 4 sur la contrepartie 3 et/ou la valeur de la pression exercée par ledit couteau. Il est possible par exemple que le micro-contact soit actionné légèrement avant que le couteau ne touche la contrepartie 3, le couteau finissant sa course par l'inertie des éléments ou grâce à une temporisation retardant le retour du vérin 7.

Lorsque le dispositif est revenu à sa position initiale de la figure 1, il est prêt pour effectuer une nouvelle coupe.

L'invention concerne le tronçonnage d'un tube et le dispositif décrit peut être aménagé dans un poste de tronçonnage de tubes unitaires, le tube 1 étant fixe, en position longitudinale, tandis que le support 12 peut être fixe ou réglable longitudinalement par rapport au tube.

Toutefois, le dispositif selon l'invention peut être aménagé sur une machine de fabrication d'un tube en continu, le support 12 étant alors mobile pour suivre l'avancement progressif du tube au cours de sa fabrication.

Enfin, il est bien évident que l'invention concerne aussi un ensemble muni de plusieurs couteaux de ce type ou muni d'un ou plusieurs couteaux avec un ou plusieurs autres moyens complémentaires de coupe tels que des meules par exemple.

## Revendications

1. Procédé de tronçonnage de tubes au moyen d'au moins un couteau (4) actionné par un vérin (7), pour l'approche du couteau vers le tube (1) à tronçonner et la pénétration dudit couteau dans la paroi du tube, procédé caractérisé en ce qu'il consiste à bloquer l'action du vérin (7) avant la fin de la coupe complète de chaque tronçon de tube et à mettre alors en action ou libérer un autre moyen que ledit vérin pour actionner le couteau jusqu'à la coupe complète de chaque tronçon de tube, la force transmise à la partie active du couteau par l'autre moyen étant plus faible que celle transmise par le vérin.

2. Dispositif de tronçonnage de tubes comportant au moins un couteau (4) actionné par un vérin (7) pour l'approche du couteau vers le tube (1) à tronçonner et la pénétration dudit couteau dans la paroi du tube, dispositif caractérisé en ce qu'il comporte un autre moyen que le vérin pour actionner ledit couteau, cet autre moyen étant aménagé pour entrer en action dès le blocage de l'action du vérin et pour transmettre sur la partie active du couteau une force plus faible que celle transmise par le vérin.

3. Dispositif selon la revendication 2, caractérisé en ce que l'autre moyen est un moyen élastique (15) qui est aménagé de manière à se libérer dès le blocage de l'action du vérin pour actionner le couteau par sa force de pression.

4. Dispositif de tronçonnage de tubes selon la revendication 3, caractérisé en ce que le couteau (4) est monté sur un porte couteau (5) pivotant sur un support (12) et dont le pivotement est assuré en partie par l'une des extrémités dudit vérin (7) dont l'autre extrémité est articulée sur un levier (10) également pivotant sur ledit support (12) et qui repose en partie sur le moyen élastique (15) destiné à faire pivoter le levier (10) vers le tube (1) à tronçonner après avoir été comprimé par ledit levier lors d'un pivotement de ce dernier dans un sens opposé au tube et après un blocage de l'extension du vérin (7), tandis qu'un moyen est prévu pour limiter la course de pivotement du levier dans le sens opposé au tube à tronçonner.

5. Dispositif selon la revendication 4, caractérisé en ce que le moyen destiné à limiter la course de pivotement du levier dans le sens opposé au tube à tronçonner est une butée arrière (16) éventuellement réglable qui vient pendre appui sur une partie fixe (17) après une certaine compression du moyen élastique (15).

6. Dispositif de tronçonnage de tubes selon l'une des revendications 4 et 5 caractérisé en ce que le moyen élastique (15) est taré pour solliciter en permanence le levier (10) qui est pourvu d'une butée avant (13) dans le sens de pivotement vers le tube (1) de telle sorte que ledit moyen élastique sollicite le levier dans une position initiale de repos qui correspond à un pivotement maximal du levier (10) vers le tube (1), le pivotement inverse du levier qui entraîne la compression du moyen élastique (15) étant dû au couple résistant exercé par le tube au début de la coupe.

7. Dispositif selon l'une des revendications 3 à 6, caractérisé en ce que le moyen élastique (15) est un ressort (18) calé dans un logement (20) et qui est muni d'une tête de pression (19) qui émerge au repos dudit logement.

8. Dispositif selon l'une des revendications 3 à 6, caractérisé en ce que le moyen élastique (15) est un vérin hydraulique ou pneumatique à pression sensiblement constante.

9. Dispositif selon l'une des revendications 2 à 8, caractérisé en ce qu'il est pourvu d'un moyen de contrôle de la position du porte couteau (5) pour commander notamment le retour du couteau (4) en position initiale par l'actionnement du vérin (7) en sens inverse.

10. Dispositif selon la revendication 9, caractérisé en ce que le moyen de contrôle est un micro-contact, de préférence réglable en position, qui est actionné par un élément (21) fixé au porte couteau (5) ou solidaire de celui-ci.

## Patentansprüche

1. Verfahren zum Schneiden von Rohren mittels mindestens eines Schneidgerätes (4), das durch einen Zylinder (7) betätigt wird, der das Schneidgerät an das Rohr (1) heranführt und es in die Wandung des Rohres eindringen läßt, dadurch gekennzeichnet, daß die Betätigung des Zylinders (7) vor jedem vollständigen Zerschneiden des Rohres blockiert und dann eine andere Einrichtung zur Betätigung des Schneidgerätes bis zu jedem vollständigen Abschneiden jedes Rohrabschnittes in Gang oder freigesetzt wird, wobei die durch die andere Einrichtung auf den aktiven Teil des Schneidgerätes übertragene Kraft geringer ist als die durch den Zylinder übertragene Kraft.

2. Vorrichtung zum Schneiden von Rohren mit mindestens einem durch einen Zylinder (7) betätigten Schneidgerät (4), der das Schneidgerät an das Rohr (1) heranführt und es in die Wandung des Rohres eindringen läßt, dadurch gekennzeichnet, daß sie noch eine andere Einrichtung zum Betätigen des Schneidgerätes als den Zylinder aufweist, wobei diese andere Einrichtung so geführt ist, daß sie von der Blockade der Betätigung des Zylinders an wirksam ist und auf den aktiven Teil des Schneidgerätes eine geringere Kraft überträgt als der Zylinder.

3. Vorrichtung nach Anspruch 2, dadurch gekennzeichnet, daß die andere Einrichtung eine elastische Einrichtung (15) ist, die so geführt ist, daß sie von der Blockade der Betätigung des Zylinders an freigesetzt ist, das Schneidgerät durch seine Druckkraft zu betätigen.

4. Vorrichtung zum Schneiden von Rohren nach Anspruch 3, dadurch gekennzeichnet, daß das Schneidgerät (4) auf einem Träger (5) montiert ist, der auf einem Ständer (12) schwenkbar ist, wobei das Schwenken des Trägers (5) teilweise durch eines der Endstücke des genannten Zylinders (7) sichergestellt ist und das andere Endstück des Zylinders an einem Hebel (10) angelenkt ist, der gleichermaßen auf dem genannten Ständer (12) schwenkbar ist und sich teilweise auf der elastischen Einrichtung (15) abstützt, die zum Schwenken des Hebels (10) gegen das zu schneidende Rohr (1) bestimmt ist, nachdem sie durch Schwenken des genannten Hebels vom Rohr weg zusammengedrückt und nachdem die Ausdehnung des Zylinders (7) blockiert ist, wobei eine Einrichtung zum Begrenzen der Schwenkbewegung des Hebels vom zu schneidenden Rohr weg vorgesehen ist.

5. Vorrichtung nach Anspruch 4, dadurch gekennzeichnet, daß die Einrichtung zum Begrenzen der Schwenkbewegung des Hebels vom zu schneidenden Rohr weg ein gegebenenfalls einstellbarer rückwärtiger Anschlag (16) ist, der sich nach einer gewissen Kompression der elastischen Einrichtung (15) auf einem festen Teil (17) abstützt.

6. Vorrichtung zum Schneiden von Rohren nach einem der Ansprüche 4 und 5 dadurch gekennzeichnet, daß die elastische Einrichtung (15) so austariert ist, daß sie den Hebel (10) permanent belastet, wobei der Hebel in Richtung der Schwenkbewegung zum Rohr (1) in der Art mit einem vorderen Anschlag (13) versehen ist, daß die genannte elastische Einrichtung den Hebel in eine anfängliche Ruhestellung drückt, die einer maximalen Schwenkung des Hebels (10) gegen das Rohr (1) entspricht, und die entgegengesetzte Schwenkbewegung des Hebels, die die Kompression der elastischen Einrichtung bewirkt, dem vom Rohr zu Beginn des Schnittes ausgeübten Gegenmoment zuzuschreiben ist.

7. Vorrichtung nach einem der Ansprüche 3 bis 6, dadurch gekennzeichnet, daß die elastische Einrichtung (15) eine in einem Lager (20) festgeklemmte und mit einem Druckkopf (19) versehene Feder (18) ist, wobei der Druckkopf in der Ruhestellung aus dem Lager herausragt.

8. Vorrichtung nach einem der Ansprüche 3 bis 6, dadurch gekennzeichnet, daß die elastische Einrichtung (15) ein hydraulischer oder pneumatischer Zylinder mit im wesentlichen konstantem Druck ist.

9. Vorrichtung nach einem der Ansprüche 2 bis 8, dadurch gekennzeichnet, daß eine Einrichtung zum Steuern der Position des Trägers (5) des Schneidgerätes vorgesehen ist, um durch Betätigen des Zylinders (7) im entgegengesetzten Sinne insbesondere die Rückführung des Schneidgerätes (4) in die Ausgangsposition zu steuern.

10. Vorrichtung nach Anspruch 9, dadurch gekennzeichnet, daß die Steuereinrichtung ein Mikrokontakt ist, dessen Lage vorzugsweise einstellbar ist und der durch ein am Träger (5) des Schneidgerätes befestigtes oder einstückig damit ausgebildetes Element (21) betätigt wird.

**Claims**

1. A method for cutting tubes by means of at least one knife (4) operated by a jack (7) to move the knife up to the tube (1) to be cut and make said knife penetrate into the wall of the tube, said method being characterised in that it consists in stopping the operation of the jack (7) before the end of complete cutting of each section of tube and then operating or releasing a means other than said jack to operate the knife until each section of tube is cut completely, the force transmitted to the active part of the knife by the other means being less than that transmitted by the jack.

2. A device for cutting tubes comprising at least one knife (4) operated by a jack (7) to move the knife up to the tube (1) to be cut and make said knife penetrate into the wall of the tube, said device being characterised in that it comprises a means other than the jack to operate said knife, this other means being arranged to come into operation as soon as the operation of the jack is stopped and to transmit a force to the active part of the knife less than that transmitted by the jack.

3. A device as in claim 2, characterised in that the other means is an elastic means (15) which is arranged so as to be released as soon as the operation of the jack is stopped to operate the knife through its pressure force.

4. A device for cutting tubes as in claim 3, characterised in that the knife (4) is mounted on a knife carrier (5) pivoting on a support (12) and the pivoting movement of which is assured in part by one of the ends of said jack (7) the other end of which is articulated on a lever (10) also pivoting on said support (12) and which rests in part on the elastic means (15) designed to pivot the lever (10) towards the tube (1) to be cut after having been compressed by said lever when the latter pivots in an opposite direction to the tube and after the extension of the jack (7) has been stopped, whereas a means is provided to limit the pivoting movement of the lever in the opposite direction to the tube to be cut.

5. A device as in claim 4, characterised in that the means designed to limit the pivoting movement of the lever in the opposite direction to the tube to be cut is a rear stop (16) which may be adjustable and bears on a fixed part (17) after a certain compression of the elastic means (15).

6. A device for cutting tubes as in one of claims 4 and 5, characterised in that the elastic means (15) is calibrated to continually force the lever (10) which is provided with a front stop (13) in the pivoting direction towards the tube (1) so that said elastic means forces the lever into an initial resting position which corresponds to a maximum pivoting movement of the lever (10) towards the tube (1), the reverse pivoting movement of the lever which leads to compression of the elastic means (15) being due to the resisting torque exerted by the tube at the start of cutting.

7. A device as in one of claims 3 to 6, characterised in that the elastic means (15) is a spring (18) retained in a housing (20) and which is provided with a pressure head (19) which emerges from said housing when at rest.

8. A device as in one of claims 3 to 6, characterised in that the elastic means (15) is a hydraulic or pneumatic jack operating at a substantially constant pressure.

9. A device as in one of claims 2 to 8, characterised in that it is provided with a means for monitoring the position of the knife carrier (5) in particular to control the return of the knife (4) to the initial position by operating the jack (7) in the reverse direction.

10. A device as in claim 9, characterised in that the monitoring means is a micro switch, preferably adjustable in position, which is operated by an element (21) fixed to the knife carrier (5) or locked to the latter.

Fig.1

*Fig: 2*

*Fig: 3*